# EUROPÄISCHE PATENTANMELDUNG

(11) **EP 2 757 279 A2**
(43) Veröffentlichungstag der Anmeldung: **23.07.2014**
(21) Anmeldenummer: 14000167.8
(22) Anmeldetag: 16.01.2014
(51) Int. Cl.: F16D 25/063, F16D 13/22

(54) **Reibschaltkupplung**

(30) Priorität: 22.01.2013 DE 102013000975
(71) Anmelder: LICOS Trucktec GmbH, 88677 Markdorf (DE)
(72) Erfinder: Geiger, Sigmund, D-88677 Markdorf (DE)
(74) Vertreter: Otten, Roth, Dobler & Partner

(57) **Zusammenfassung**

Es wird eine Reibschaltkupplung (1) mit einem Kupplungsring (2) und mit zwei Kupplungsscheiben (3, 4), die um eine Kupplungsdrehachse drehbar gelagert sind und an denen Reibflächen (21a, 21b, 22a, 22b) ausgebildet sind, vorgestellt. Dabei sind der Kupplungsring (2) und die Kupplungsscheiben (3, 4) parallel zur Kupplungsdrehachse und relativ zueinander derart verschiebbar, dass für eine Drehmomentübertragung erste Reibflächen (21a, 21b, 22a, 22b) an jeder der Kupplungsscheiben (3, 4) mit jeweils einer zweite Reibfläche (20a, 20b) am Kupplungsring (2) in flächigen Reibkontakt versetzbar sind. Die Erfindung zeichnet sich dadurch aus, dass jeweils eine erste (21a, 21b, 22a, 22b) und eine zweite (20a, 20b) Reibfläche als Reibflächenpaar mit jeweils einer in Richtung der Kupplungsdrehachse konvex und einer in Richtung der Kupplungsdrehachse konkav gekrümmten Reibfläche aufeinander abgestimmt sind.

## Beschreibung

Die Erfindung betrifft eine Reibschaltkupplung nach dem Oberbegriff des Anspruchs 1.

Reibschaltkupplungen sind in den verschiedensten Ausführungen, insbesondere aus dem Bereich des Fahrzeugbaus, bekannt. Dabei wird insbesondere zur Übertragung von Drehbewegungen auf ein Hilfsaggregat eine möglichst kompakte, raumsparende Bauweise angestrebt.

Beispielsweise sind Reibschaltkupplungen bekannt, bei denen zwei Kupplungsscheiben und ein Kupplungsring um eine gemeinsame Kupplungsdrehachse drehbar gelagert sind, wobei die zwei Kupplungsscheiben relativ zueinander sowie gegenüber einem Kupplungsring axial entlang der Kupplungsdrehachse verschiebbar gelagert sind. Die Kupplungsscheiben können auf einer gemeinsamen Drehwelle jeweils drehfest und axial verschiebbar gelagert sein, wodurch sie sich beispielsweise durch aneinander Annähern oder durch voneinander Entfernen mit dem Kupplungsring, der getrennt von den Kupplungsscheiben drehbar gelagert ist, in Reibkontakt bringen lassen. Des weiteren können auch die beiden Kupplungsscheiben voneinander getrennt und z.B. koaxial gelagert sein, um beispielsweise eine Drehbewegung von einer ersten der Kupplungsscheiben über den Kupplungsring auf eine zweite der Kupplungsscheiben zu übertragen.

Häufig sind bei solchen Reibschaltkupplungen die Reibflächen an konischen Oberflächenbereichen der Kupplungsscheiben und dem Kupplungsring ausgebildet. Dabei lassen sich z.B. die Kupplungsscheiben wie Keile in z.B. den Kupplungsring hineinschieben, wodurch eine Klemmwirkung erreichbar ist, mit der sich ein übertragbares Drehmoment vorteilhaft erhöhen lässt. Beim Schließen oder Lösen solcher Kupplungen können allerdings große Wärmemengen entstehen, die nicht nur die zusammenwirkenden Reibflächen vergleichsweise stark beanspruchen sondern ein Trennen der Reibflächen für ein Entkuppeln bei zu hohen Betätigungskräften erschweren.

Die Aufgabe der vorliegenden Erfindung besteht darin, eine verbesserte Reibschaltkupplung bereitzustellen, die bei gleicher Baugröße eine erhöhte Stabilität und Zuverlässigkeit aufweist.

Die erfindungsgemäße Aufgabe wird durch eine Reibschaltkupplung mit den Merkmalen des Anspruchs 1 gelöst.

Bevorzugte und vorteilhafte Ausführungen der Erfindung sind in den abhängigen Ansprüchen angegeben.

Die Erfindung geht von einer Reibschaltkupplung mit einem Kupplungsring und mit zwei Kupplungsscheiben aus, wobei der Kupplungsring und die Kupplungsscheiben um eine, insbesondere gemeinsame Kupplungsdrehachse drehbar gelagert sind. Am Kupplungsring und an den Kupplungsscheiben sind Reibflächen ausgebildet. Der Kupplungsring und die Kupplungsscheiben sind parallel zur Kupplungsdrehachse und relativ zueinander derart verschiebbar, dass für eine Drehmomentübertragung erste Reibflächen an jeder der Kupplungsscheiben mit jeweils einer zweiten Reibfläche am Kupplungsring in flächigen Reibkontakt versetzbar sind.

Der Kern der Erfindung besteht darin, dass jeweils eine erste und eine zweite Reibfläche als Reibflächenpaar mit jeweils einer in Richtung der Kupplungsdrehachse konvex und einer in Richtung der Kupplungsdrehachse konkav gekrümmten Reibfläche aufeinander abgestimmt sind.

Die Reibflächen sind daher nicht ausschließlich senkrecht zur Kupplungsdrehachse angeordnet, sondern weisen Flächenbereiche mit einer Tangentialfläche auf, deren Normalenvektor eine radial nach außen gerichtete Komponente besitzt. Mit einer in Richtung der Kupplungsdrehachse konkaven oder konvexen Krümmung einer Reibfläche ist hierbei gemeint, dass jede einzelne Reibfläche eines Reibflächenpaares zusätzlich zu der durch die Kupplungsdrehachse vorgegebenen Krümmung auch mindestens ein Krümmungszentrum aufweist, das mindestens einen Krümmungsradius senkrecht zur Kupplungsdrehachse besitzt. Die Krümmungsradien können unterschiedlich sein. Gedanklich lässt sich die zusätzliche Krümmung mit Hilfe einer zur Kupplungsdrehachse parallelen Ebene, die durch die Kupplungsdrehachse verläuft und eine der Reibflächen schneidet veranschaulichen, wobei sich auf dieser Ebene eine konvex oder konkav gekrümmte Reibfläche als bogenartig gewölbter Linienabschnitt abzeichnet, der einen endlichen, konstanten oder veränderlichen Krümmungsradius besitzt.

Vorzugsweise sind eine erste und eine zweite Reibfläche eines Reibflächenpaares derart aufeinander abgestimmt, dass im Reibkontakt z.B. die Krümmungszentren und z.B. die Krümmungsradien aneinander anliegender, entlang der Kupplungsdrehachse gekrümmter Reibflächenbereiche, insbesondere bei allen berührenden Reibflächenbereichen, zusammenfallen. Dadurch stehen im eingekuppelten Zustand die Reibflächen vorteilhaft vollständig in Berührung und tragen gesamtheitlich zur Drehmomentübertragung bei.

Indem die Reibflächen neben einer Krümmung um die Drehachse der Kupplung zusätzlich eine weitere Krümmung in paralleler Richtung zur Kupplungsdrehachse aufweisen, kann die erfindungsgemäße Kupplung über eine gegebene Länge entlang der Kupplungsdrehachse eine größere Reibfläche zur Verfügung stellen als beispielsweise eine Kupplung mit konischen Reibflächen. Zudem wirken die gekrümmten Reibflächen vorteilhaft einer Selbsthemmung der Kupplungsscheiben am Kupplungsring entgegen. Denn durch die zusätzliche Krümmung der Reibflächen entlang der Kupplungsdrehachse sind beim Aneinanderpressen der Reibflächen die Kräfte auf eine radial außen liegende Reibfläche über einen entsprechenden Abschnitt der Kupplungsdrehachse nicht in einem einheitlichen Winkel bezüglich einer Ebene, die die Kupplungsdrehachse senkrecht schneidet, geneigt, sondern diese Neigung der Kraftrichtung ändert sich entlang der Kupplungsdrehachse. Ein Reibflächenpaar kann dadurch sowohl Flächenabschnitte mit vergleichsweise starker Klemmwirkung als auch Flächenbereiche, die einem Festsitzen im eingekuppelten Zustand entgegenwirken, aufweisen.

Die konkav und die konvex gekrümmten Reibflächen können dabei zumindest annähernd einen sphärischen Verlauf aufweisen. Dies bietet den Vorteil, dass beispielsweise eine konvexe Reibfläche nicht nur um die Kupplungsachse herum, sondern auch in Richtung entlang der Kupplungsachse konvex verläuft. Dabei liegen die Krümmungszentren für Krümmungen, die in voneinander unabhängigen Richtungen einer der Reibflächen verlaufen, vorteilhaft auf einer gemeinsamen Seite bezüglich der betrachteten Reibfläche. Weil die Herstellung sphärischer Oberflächenformen besser kontrollierbar ist, ist es insbesondere bevorzugt, dass die Reibflächen einen sphärischen Verlauf gemäß eines Oberflächenabschnitts einer Kugel bzw. eines Kugelhohlraums aufweisen.

Prinzipiell sind auch Ausführungen der erfindungsgemäßen Reibschaltkupplung denkbar, bei denen die Reibflächen konvex und konkav gekrümmt sind, wodurch sie Oberflächenabschnitten eines z.B. Torus ähnlich sein können.

Vorzugsweise sind die Reibflächen eines Reibflächenpaares in der Art eines Abschnitts einer Randfläche, insbesondere einer Oberfläche mit Abschnitten eine Kugeloberfläche geformt. Insbesondere haben die Reibflächen die Form einer Oberfläche einer Kugelschicht. Unter Kugelschicht wird in der vorliegenden Erfindung entsprechend der mathematischen Definition ein Abschnitt einer Kugel mit planparallelen Seitenflächen verstanden. Im Folgenden wird diese Art von Oberflächenform als Kugeloberflächenstreifen bezeichnet. Im Falle einer konkaven Reibfläche entspricht der Oberflächenabschnitt bevorzugt einem Kugeloberflächenstreifen der Innenoberfläche einer Hohlkugel, zumindest abschnittsweise. Eine solche Ausführung bietet den Vorteil, dass die Reibflächen eines Reibflächenpaares Oberflächenabschnitt einer Kugel bzw. Hohlkugel auch bei unterschiedlichen axialen Kräften parallel zur Kupplungsdrehachse immer im flächigen Reibkontakt bleiben.

Die zweiten Reibflächen am Kupplungsring können konvex gekrümmt sein. Für eine bevorzugte Ausführung der Erfindung ist vorgesehen, dass die zweiten Reibflächen am Kupplungsring konkav gekrümmt sind. Dabei können sich die ersten Reibflächen der Kupplungsscheibe zum Beispiel bei einer axialen Bewegung bis zum Anschlag am Kupplungsring in die konkaven Reibflächen des Kupplungsrings stemmen und dadurch vorteilhaft eine vergleichsweise hohe Klemmwirkung erreichen.

Insbesondere wenn die zweiten Reibflächen am Kupplungsring nicht nur konkav gekrümmt sind, sondern auch einander zugeneigt sind, bietet dies den Vorteil, dass sich die Reibschaltkupplung derart ausbilden lässt, dass die Kupplungsscheiben innerhalb des Kupplungsrings liegend beim Auseinanderbewegen an den zweiten Reibflächen in Reibkontakt gelangen und im Reibschluss einen im Wesentlichen geschlossenes System bilden, in das Verunreinigungen kaum oder gar nicht eindringen können.

Für eine bevorzugte Ausführung der Erfindung ist der Kupplungsring als durchgehend in einem Stück und vorzugsweise aus einem Material hergestelltes Bauteil ausgebildet. Dadurch weist der Kupplungsring vorteilhaft eine hohe Stabilität auf. Wenn der Kupplungsring einstückig und durchgehend aus einem Material hergestellt ist, bietet der dadurch erreichbare homogene Materialzusammenhang eine bessere Wärmeleitfähigkeit zum Abführen beispielsweise von Reibungswärme.

Die Durchmesser der Kupplungsscheiben können über einen Winkelabschnitt um eine vorgegebene Drehachse derart verringert sein, dass die Kupplungsscheiben gemeinsam in den Kupplungsring einführbar sind. Dadurch kann eine erfindungsgemäße Kupplung auch mit einem einstückig ausgebildeten Kupplungsring montiert werden.

Um eine Unwucht bei Drehbewegungen der Kupplungsscheiben zu vermeiden, sind die Durchmesser der zwei Kupplungsscheiben jeweils symmetrisch zu einer vorgegebenen Drehachse über einen Winkelabschnitt verringert.

Eine Montage der Kupplung kann außerdem auch dadurch erleichtert werden, dass am Kupplungsring zumindest eine Ausnehmung ausgebildet ist, mit deren Hilfe die Kupplungsscheiben in den Kupplungsring einführbar sind.

Zwischen den Kupplungsscheiben können eine oder mehrere Federn angeordnet sein, die die Kupplungsscheiben voneinander wegdrücken. Des Weiteren ist es möglich, dass auf die Kupplungsscheiben ein oder mehrere Federelemente einwirken, die die Kupplungsscheiben aus z.B. einer ausgekoppelten Stellung voneinander wegbewegen können.

Um bei einer Betätigung der erfindungsgemäßen Reibschaltkupplung zum Auskuppeln ein Lösen beider Kupplungsscheiben vom Kupplungsring zu gewährleisten, ist im Kupplungsring vorzugsweise ein z.B. ringförmiges Anschlagelement zwischen z.B. zwei konkaven Reibflächen des Kupplungsrings ausgebildet. Der Kupplungsring kann beispielsweise ein oder mehrere Öffnungen, insbesondere zwischen innen liegenden Reibflächen, aufweisen, an denen ein Anschlagelement, z.B. ein Anschlagring, in den Kupplungsring und vorzugsweise zwischen die Kupplungsscheiben einführbar sind. Hierdurch lässt sich ein Anschlagelement vorteilhaft nach einer Montage der Kupplungsscheiben im Kupplungsring anbringen. Um Öffnungen am Kupplungsring zu vermeiden, können Fixiermittel vorgesehen sein, mit denen ein Anschlagelement für eine gemeinsame Montage mit den Kupplungsscheiben an wenigstens einer der Kupplungsscheiben zeitweise anbringbar ist. Dadurch ist eine vergleichsweise höhere Festigkeit des Kupplungsrings erreichbar.

Nachfolgend wird die Erfindung an mehreren Ausführungsbeispielen mit Hilfe von Zeichnungen näher erläutert und weitere Vorteile aufgeführt. Es zeigen:
- Figur 1: eine schematische Seitenansicht eines Ausschnitts eines Kompressors mit einer erfindungsgemäßen Kupplung in einer Schnittdarstellung parallel zur Kupplungsdrehachse,
- Figur 2: schematische, perspektivische Explosionsansicht einer erfindungsgemäßen Kupplung,
- Figur 3: Draufsicht auf eine erfindungsgemäße Kupplung in Montagestellung,
- Figur 4: eine schematische Seitenansicht einer erfindungsgemäßen Kupplung in geschnittener Darstellung einer Schnittebene senkrecht zur Symmetrieebene der Kupplungsdrehachse,
- Figur 5: schematische Seitenansicht einer Kupplung in Montagestellung,
- Figur 6: schematische Ansicht der inneren Stirnseite einer Kupplungsscheibe und einer Anschlagfeder,
- Figur 7a: schematische perspektivische Schnittansicht einer Reibschaltkupplung an einer durch eine Kupplungsachse und parallel dazu verlaufenden Schnittebene,
- Figur 7b: schematische perspektivische Schnittansicht einer Reibschaltkupplung an einer durch eine Kupplungsdrehachse und parallel dazu verlaufenden Schnittebene.

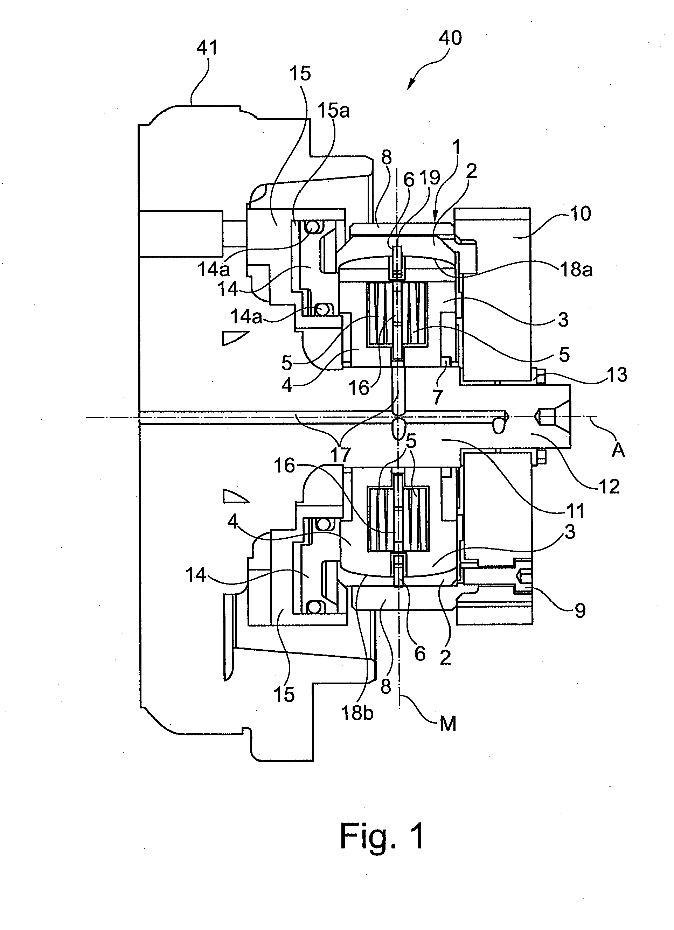

In Figur 1 ist ein Ausschnitt eines Kompressors 40 mit einer erfindungsgemäßen Reibschaltkupplung 1 gezeigt. Die Reibschaltkupplung 1 ist dazu vorgesehen, fallweise eine Drehbewegung von einem Antriebsrad auf eine Drehwelle 11, 12 zu übertragen oder die beiden Teile zu entkoppeln.

Die Reibschaltkupplung 1 ist in Figur 1 im eingekuppelten Zustand gezeigt. Ein Kupplungsring 2 bietet eine Antriebsseite der Kupplung und ist über Mitnehmer 8 mit dem Antriebsrad 10 verbunden. Der Mitnehmer 8 kann ein- oder mehrteilig ausgebildet sein und ist beispielsweise mit einer Schraube 9 am Antriebsrad 10 befestigt.

Das Antriebsrad 10 ist mit einem Drehlager koaxial zu einem vorderen Wellenabschnitt koaxial zur Abtriebswelle gelagert. Die Kupplung 1, das Antriebsrad 10 und die Drehwelle 11, 12 drehen sich um eine gemeinsame Achse a, die zugleich eine Kupplungsdrehachse definiert.

Zwischen dem Kupplungsring 2 und dem Wellenabschnitt 11 sind zwei Kupplungsscheiben 3 und 4 angeordnet und axial verschiebbar, parallel zur Kupplungsdrehachse a gelagert. Zwischen den Kupplungsscheiben 3 und 4 sind ein oder mehrere Federelemente 5 angeordnet, die beispielsweise aus zwei Stapeln von Tellerfedern bestehen können. Durch die Feder 5 sind die Kupplungsscheiben 3 und 4 in einer auseinander gerückten Stellung gehalten, wobei sich ein erstes Reibflächenpaar 18a zwischen der Kupplungsscheibe 3 und dem Kupplungsring 2 sowie ein zweites Reibflächenpaar 18b zwischen der Kupplungsscheibe 4 und dem Kupplungsring 2 in Reibkontakt befinden. Durch eine späherische, konvexe Krümmung der Reibflächenpaare 18a und 18b auf Seiten des Kupplungsrings 2 ist ein Auseinanderbewegen der Kupplungsscheiben 3 und 4 in axialer Richtung a begrenzt.

Im Bereich einer Mittelebene senkrecht zur Drehachse A weist der Kupplungsring 2 eine nutförmige Ausnehmung 19 auf, in die ein Anschlagring 6 hineinragt, wodurch die Position des Anschlagrings 6 fixiert ist.

Am Wellenabschnitt 11 ist ein Sicherungsring 7 angebracht, der axiale Bewegungen, parallel zur Drehachse, in Richtung des Antriebsrads 10 begrenzt. Zur Betätigung der Kupplung 1 ist ein Ringkolben 14 vorgesehen. Der Ringkolben 14 ist in einem Zylinder 15 beweglich gelagert und mit Dichtungsringen 14a derart zum Zylinder 15 abgedichtet, dass in einem Druckraum 15a des Zylinder 15 Drücke einstellbar sind, mit denen der Kolben 14 die Kupplungsscheibe 4 auf die Kupplungsscheibe 3 gegen die Kraft der Feder 5 zubewegen kann. Mit dem Anschlagring 6 lässt sich erreichen, dass bei einem Zusammenbewegen der Kupplungsscheiben 3 und 4 sich der Kupplungsring 2 von beiden Kupplungsscheiben 3 und 4 löst und damit das Antriebsrad 10 von der Welle 11, 12 entkuppelt wird.

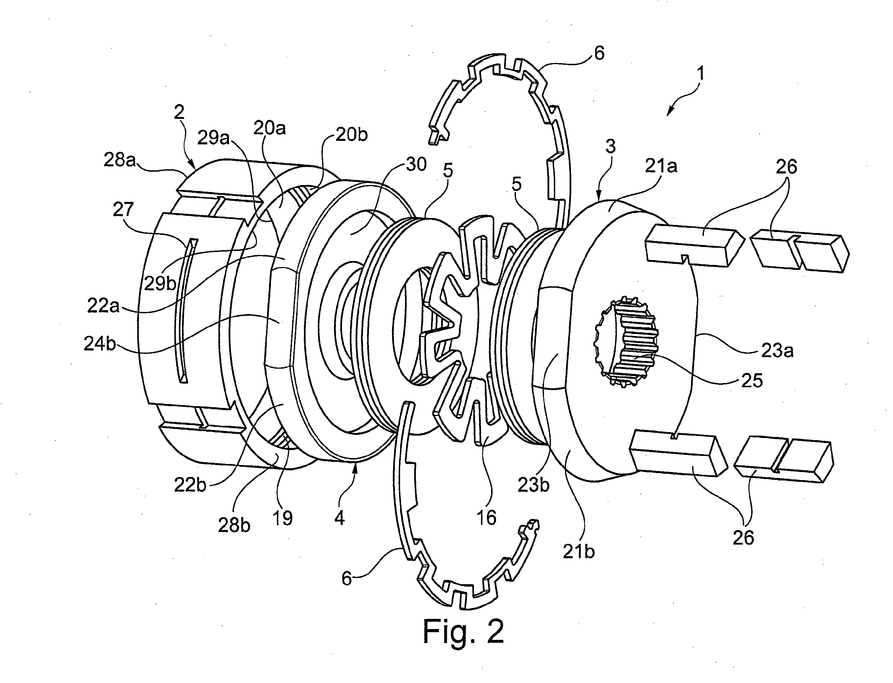

Ein weiteres Ausführungsbeispiel einer erfindungsgemäßen Reibschaltkupplung 1 ist in Figur 2 gezeigt. Die Reibschaltkupplung 1 besitzt einen Kupplungsring 2, der vorzugsweise einstückig ausgebildet ist. An der Innenseite des Kupplungsrings 2 sind zwei Reibflächen 20a und 20b ausgebildet, die jeweils die Drehsymmetrieachse des Kupplungsrings 2 vollständig umlaufen. Dabei sind die Reibflächen 20a und 20b sphärisch gekrümmt, d.h. sie weisen nicht nur eine Krümmung um die Hauptachse des Kupplungsrings auf, sondern weisen zusätzlich entlang der Hauptachse einen nicht-linearen gekrümmten Verlauf auf. Durch die Krümmung weisen die beiden Reibflächen 20a und 20b in der Mitte den größten Innendurchmesser auf. Dabei sind die beiden Reibflächen 20a und 20b derart konkav einander zugeneigt, dass jede der beiden Reibflächen 20a und 20b an der jeweiligen Stirnseite 28a und 28b den kleinsten Innendurchmesser erreicht. An diesen Stirnseiten 28a und 28b sind die Reibflächen 20a und 20b jeweils durch eine Aussenkante 29a bzw. 29b begrenzt.

Die Reibflächen 20a und 20b sind durch eine zwischen ihnen an der Innenseite des Kupplungsrings 2 verlaufende Nut 19 voneinander getrennt. Der Kupplungsring 2 kann Schlitze 27 aufweisen, an denen der Kupplungsring 2 bis zur Nut 19 durchbrochen ist und durch den beispielsweise Segmente eines Anschlagsrings 6 in den Bereich innerhalb des Kupplungsrings 2 einführbar sind.

Die Reibschaltkupplung 1 umfasst zwei Kupplungsscheiben 3 und 4, die ringförmig ausgebildet sind. An ihrer zentralen inneren Öffnung können die Kupplungsscheiben 3 und 4 eine Verzahnung 25 aufweisen, mit der die Kupplungsscheiben an einer Zahnwelle (nicht gezeigt) drehfest und axial verschiebbar gelagert sein können.

An einer radial nach außen weisenden Randfläche der Kupplungsscheiben 3 sind Reibflächen 21a und 21b ausgebildet. Ebenso weist die Kupplungsscheibe 4 an einer äußeren Randfläche Reibflächen 23a und 23b auf. Die Reibflächen 21a, 21b, 22a und 22b der Kupplungsscheiben 3 und 4 sind an die jeweiligen Reibflächen 20a und 20b des Kupplungsrings 20 angepasst. Insbesondere können sie mit dem gleichen Kugelradius einer Kugeloberfläche konvex ausgebildet sein wie die konkaven Reibflächen 20a und 20b an der Innenseite des Kupplungsrings 2.

Der Mittelpunkt der als Kugelflächenabschnitte ausgebildeten Reibflächen liegt im Zentrum des Kupplungsrings 2, auf den sich die Kupplungsscheiben 3 und 4 zubewegen lassen, um die Reibflächen 21a und 21b sowie 22a und 22b von den jeweiligen Reibfläche 20a und 20b am Kupplungsring zu lösen.

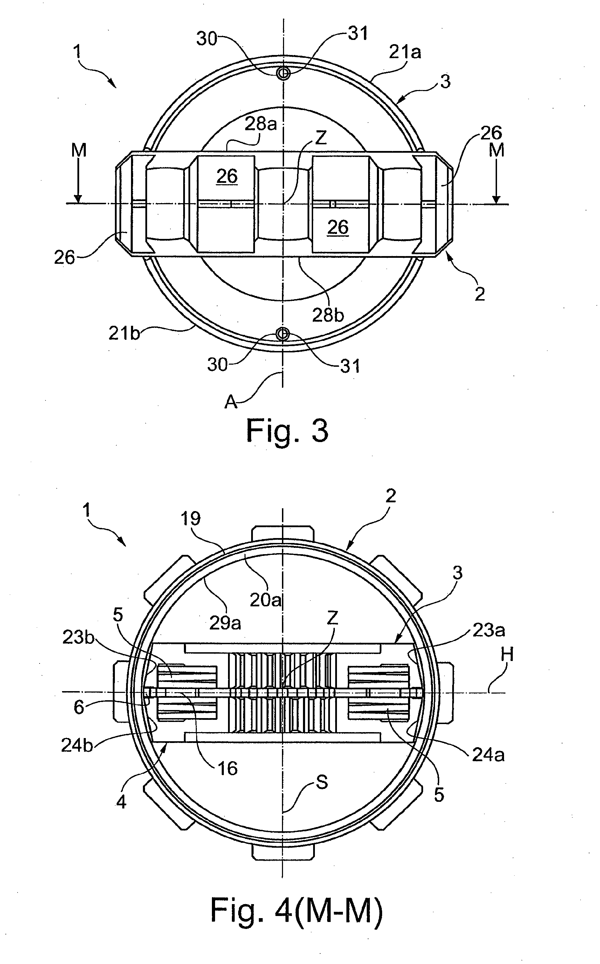

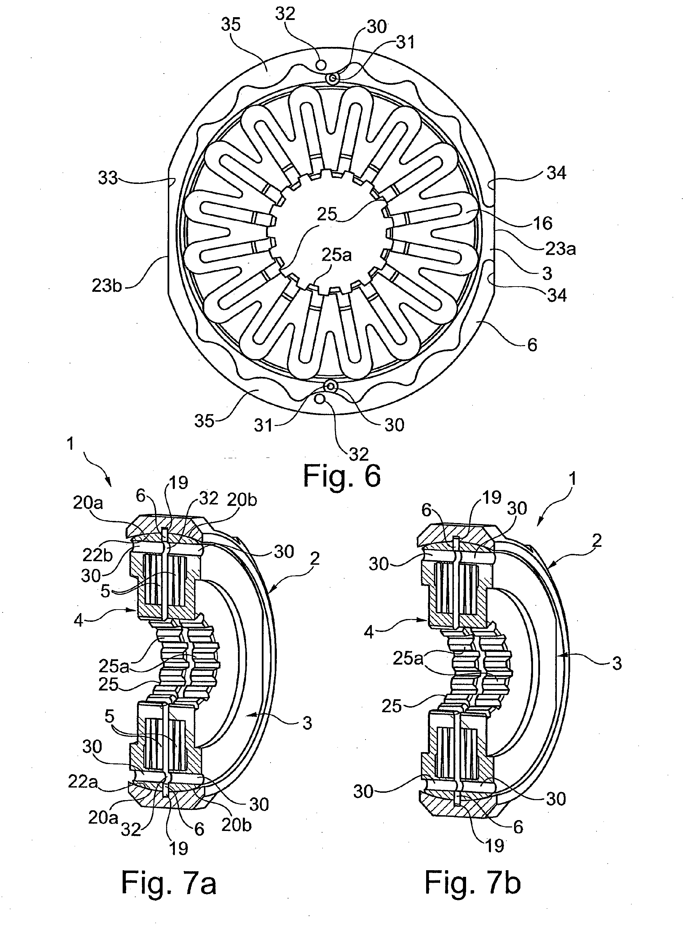

In den Figuren 3, 4, 5, 6, 7a und 7b ist ein weiteres Ausführungsbeispiel für eine erfindungsgemäße Reibschaltkupplung 1 gezeigt, mit deren Hilfe ein Zusammenbauen der Reibschaltkupplung 1 nachfolgend erklärt wird.

In den Figuren 3 und 4 ist die Reibschaltkupplung in einer ersten Montagestellung gezeigt. Zwei Kupplungsscheiben 3 und 4 sind gegen eine Kraft von Federelementen 5 zusammengedrückt, wobei zwischen den Kupplungsscheiben 3 und 4 eine Durchlassscheibe 16 und eine Anschlagfeder 6 angeordnet sind. Die Kupplungsscheiben 3 und 4 sind symmetrisch ober- und unterhalb einer Zwischenebene Horizontalebene H (Fig.4) angeordnet, in der die Kupplungsachse A eingebettet ist und die rechtwinklig eine Mittelebene M des Kupplungsrings 2 schneidet.

Der Kupplungsring 2 weist an der Innenseite zwei konkave, sphärische Reibflächen 20a und 20b auf, die durch eine Nut 19 voneinander getrennt sind. Dabei entsprechen die beiden Reibflächen 20a und 20b Kugelschichtrandflächen einer Innenseite einer gemeinsamen Kugelschale. Dementsprechend sind die Reibflächen 20a und 20b mit einem gleichen, konstanten Krümmungsradius um ein gemeinsames Krümmungszentrum gewölbt.

An einer Außenkante 29a treffen eine konkave sphärische Reibfläche 20a und eine Stirnseite 28a aufeinander. In gleicher Weise treffen eine Reibfläche 20b und eine Stirnseite 28b des Kupplungsrings 2 an einer Außenkante 29b aufeinander. Die Außenkanten 29a und 29b haben vorzugsweise einen gleichen Innendurchmesser bzw. Innenradius.

Eine in Figur 3 gezeigte Mittelebene M des Kupplungsrings 2 steht senkrecht zur Kupplungsdrehachse und bildet eine Schnittebene für eine in Figur 4 gezeigte Ansicht entlang der Kupplungsdrehachse A. Die Horizontalebene, die zwischen den Kupplungsscheiben 3, 4 liegt, verläuft durch das Krümmungszentrum Z der Reibflächen 20a und 20b. Das Krümmungszentrum Z bildet zugleich das Zentrum der Reibschaltkupplung und liegt im Schnittpunkt der Mittelebene M und der Kupplungsdrehachse A.

An den Kupplungsscheiben 3 und 4 sind konvexe Reibflächen 21a, 21b, 22a, 22b ausgebildet, deren geometrische Form einer Randfläche von Kugelschichten mit planparallelen Stirnseiten entsprechen und die an die Reibflächen 20a, 20b des Kupplungsrings 2 angepasst sind.

Die Kupplungsscheiben 3 und 4 weisen Verengungen 23a, 23b, 24a und 24b auf, an denen Randbereiche der Kupplungsscheiben 3 und 4 von der Form von Kugelschichtflächen abweichen. In Figur 4 ist erkennbar, dass die Verengungen 23a, 23b, 24a und 24b an einen Innenradius von Außenkanten 29a und 29b angepasst sind. An jeder der Kupplungsscheiben 3 und 4 sind die Verengungen an gegenüberliegenden Schmalseiten der Kupplungsscheiben 3, 4 zueinander parallel verlaufend ausgebildet. Dadurch ist eine Körperachse für eine Stellung und Richtung an jeder der Kupplungsscheiben 3 und 4 für eine Montagebewegung vorgegeben, Bei einer Montage der Kupplungsscheiben 3, 4 ist vorgesehen, dass die Verengungen 23a, 23b und 24a, 24b in Deckung zueinander angeordnet sind, damit sich die Kupplungsscheiben 3, 4 gleichzeitig in eine Position bringen lassen, die einen nächsten Montageschritt ermöglicht.

Durch ein Zusammenpressen der Kupplungsscheiben 3, 4 parallel zu deren Hauptsymmetrieachsen bzw. Drehachsen kann der Umriss eines Querschnitts, den beide Kupplungsscheiben 3 und 4 gemeinsam bilden, derart verringert werden, dass sich die Kupplungsscheiben mit den Verengungen 23a, 23b, 24a und 24b an den Außenkanten 29a und 29b vorbei in den Kupplungsring 2 einführen lassen. Dadurch sind die Kupplungsscheiben 3 und 4 derart im Kupplungsring positionierbar, dass der Mittelpunkt der zusammengepressten Kupplungsscheiben 3 und 4 mit dem Krümmungszentrum Z der konkaven, sphärischen Reibflächen 20a und 20b zusammenfällt.

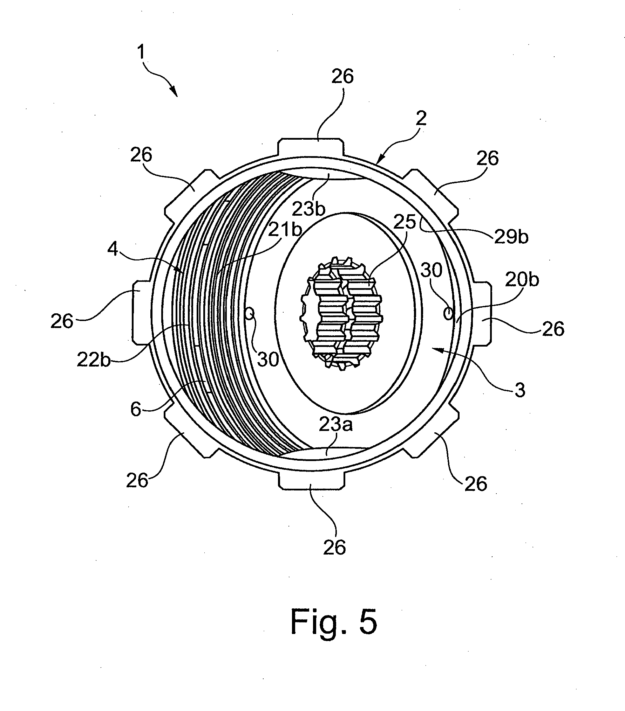

Aufgrund der Kugelsymmetrie der nächstenliegenden Oberflächen im Kupplungsring 2 - nämlich der konkaven Reibflächen 20a und 20b - in der zum Kupplungsring 2 zentrierten Position sind die zusammengepressten Kupplungsscheiben 3 und 4 um das Krümmungszentrum Z, wie in Figur 5 gezeigt, drehbar. Sie lassen sich daher in eine zur Mittelebene M des Kupplungsrings 2 koplanare Stellung schwenken, in der sie im eingekuppelten, reibkraftschlüssigen Zustand gemeinsam mit dem Kupplungsring 2 um die Kupplungsdrehachse A rotieren können.

An den Kupplungsscheiben 3, 4 können zum Beispiel zwei Bohrungen 30 dezentral insbesondere in der Nähe der Reibflächen 21a, 21b, 22a und 22b parallel zur Drehachse durch die Kupplungsscheiben 3, 4 hindurchführen. Die Bohrungen 30 sind dazu vorgesehen, Stifte 31 durch beide Kupplungsscheiben 3, 4 zumindest im zur Montage zusammengepressten Zustand hindurchzustecken. Auf diese Weise sind die beiden Drehscheiben zueinander derart fixierbar, dass die Zähne 25a einer Verzahnung in der Ausnehmung 25 zueinander fluchtend parallel zur Kupplungsdrehachse angeordnet sind. Dabei lassen sich die beiden Kupplungsscheiben 3, 4 mit den Stiften gegen ein Verdrehen zueinander sichern, wodurch die Kupplungsscheiben bei einer Montage bezüglich der Verengungen 23a, 23b und 24a, 24b in Deckung zueinander gehalten bleiben. Die Bohrungen 30 sowie die Stifte 31 bieten darüber hinaus die Möglichkeit, mit den Kupplungsscheiben 3, 4 nicht nur eine Durchlassscheibe 16 sondern insbesondere auch eine Anschlagfeder 6 im Kupplungsring 2 zu montieren.

Die Anschlagfeder 6 weist an den verbreiterten bogenförmigen Abschnitten 35 Bohrungen 32 auf, durch die die Stifte 31 durchführbar sind. Zwischen den verbreiterten Abschnitten 35 ist an einer Seite ein verjüngter Bereich 33 ausgebildet, durch die Feder 6 elastisch zusammendrücken lässt, um die Bohrungen 32 der Anschlagfeder 6 mit den Bohrungen 30 der Kupplungsscheibe 3 in Deckung zu bringen und die Stifte 31 durch die Bohrungen 32 hindurchzustecken. Durch die Fixierung der gespannten Anschlagfeder 6 an der Kupplungsscheibe 3 mittels der Fixierstifte 31 lässt sich der äußere Umriss der Anschlagfeder 6 derart verkleinern, dass die Anschlagfeder 6 vollständig innerhalb des äußeren Umrisses der Kupplungsscheibe 3 angeordnet ist und somit an keiner Stelle über den Umriss der Kupplungsscheiben 3, 4 hinausragen kann. Auf diese Weise ist die Anschlagfeder 6 derart zwischen den Kupplungsscheiben 3, 4 angesetzt, dass sie gleichzeitig mit den Kupplungsscheiben in den Kupplungsscheiben 2 einsetzbar ist. Gegebenenfalls können die Fixierstifte 31 für eine Fixierung der Kupplungsscheiben bei zusammengedrückten Federn 5 ausgebildet sein.

Nachdem die Kupplungsschreiben im Kupplungsring in eine koplanare zentrale Position gebracht ist, können die Fixierstifte 31 gelöst werden, um den Anschlagring 6 expandieren zu lassen, wobei er in die Nut 19 zwischen die Reibflächen 20a und 20b des Kupplungsrings 2 eindringen kann. Dies bietet den Vorteil, dass sich der Kupplungsring 2 als ein in sich geschlossener Körper ausbilden lässt, wodurch am Kupplungsring eine radial von außen an die Nut 19 durchreichende Öffnung bzw. Ausnehmung erforderlich ist, die die Festigkeit des Kupplungsrings 2 beeinträchtigt.

### Bezugszeichenliste:

- 1: Reibschaltkupplung
- 2: Kupplungsring
- 3: Kupplungsscheibe
- 4: Kupplungsscheibe
- 5: Federelement
- 6: Anschlagfeder
- 7: Sicherungsring
- 8: Mitnehmer
- 9: Schraube
- 10: Antriebsrad
- 11: Wellenabschnitt
- 12: Wellenabschnitt
- 13: Drehlager
- 14: Ringkolben
- 15: Zylinder
- 16: Durchlassscheibe
- 17: Ölzuleitung
- 18a: Reibflächenpaar
- 18b: Reibflächenpaar
- 19: Nut
- 20a: Konkave Reibfläche
- 20b: Konkave Reibfläche
- 21a: Konvexe Reibfläche
- 21b: Konvexe Reibfläche
- 22a: Konvexe Reibfläche
- 22b: Konvexe Reibfläche
- 23a: Verengung
- 23b: Verengung
- 24a: Verengung
- 24b: Verengung
- 25: Ausnehmung
- 25a: Zahn
- 26: Verdrehsperrelemente
- 27: Durchführöffnung
- 28a: Stirnseite
- 28b: Stirnseite
- 29a: Außenkante
- 29b: Außenkante
- 30: Bohrung
- 31: Arretierstift
- 32: Öffnung
- 33: Abschnitt
- 34: Endabschnitt
- 40: Kompressor
- 41: Gehäuse

## Patentansprüche

1. Reibschaltkupplung (1) mit einem Kupplungsring (2) und mit zwei Kupplungsscheiben (3, 4), die um eine Kupplungsdrehachse drehbar gelagert sind und an denen Reibflächen (21a, 21b, 22a, 22b) ausgebildet sind, wobei der Kupplungsring (2) und die Kupplungsscheiben (3, 4) parallel zur Kupplungsdrehachse und relativ zueinander derart verschiebbar sind, dass für eine Drehmomentübertragung erste Reibflächen (21a, 21b, 22a, 22b) an jeder der Kupplungsscheiben (3, 4) mit jeweils einer zweite Reibfläche (20a, 20b) am Kupplungsring (2) in flächigen Reibkontakt versetzbar sind,
**dadurch gekennzeichnet,**
**dass** jeweils eine erste (21a, 21b, 22a, 22b) und eine zweite (20a, 20b) Reibfläche als Reibflächenpaar mit jeweils einer in Richtung der Kupplungsdrehachse konvex und einer in Richtung der Kupplungsdrehachse konkav gekrümmten Reibfläche aufeinander abgestimmt sind.

2. Reibschaltkupplung (1) nach einem der vorgenannten Ansprüche, **dadurch gekennzeichnet, dass** der Kupplungsring (2) als in einem Stück hergestelltes Bauteil ausgebildet ist.

3. Reibschaltkupplung (1) nach einem der vorgenannten Ansprüche, **dadurch gekennzeichnet, dass** Fixiermittel (30, 31, 32) vorgesehen sind, mit denen ein Anschlagelement (6) für eine gemeinsame Montage mit den Kupplungsscheiben (3, 4) im Kupplungsring (2) an wenigstens einer der Kupplungsscheiben (3, 4) zeitweise anbringbar ist.

4. Reibschaltkupplung (1) nach Anspruch 1, **dadurch gekennzeichnet, dass** die konkav und die konvex gekrümmten Reibflächen (20a, 20b, 21a, 21b, 22a, 22b) zumindest annähernd einen sphärischen Verlauf aufweisen.

5. Reibschaltkupplung (1) nach einem der vorgenannten Ansprüche, **dadurch gekennzeichnet, dass** die Reibflächen (20a, 20b, 21a, 21b, 22a, 22b) eines Reibflächenpaares in der Art einer gekrümmten Randfläche einer Kugelschicht geformt sind.

6. Reibschaltkupplung (1) nach einem der vorgenannten Ansprüche, **dadurch gekennzeichnet, dass** die zweiten Reibflächen (20a, 20b) am Kupplungsring (2) konkav gekrümmt sind.

7. Reibschaltkupplung (1) nach einem der vorgenannten Ansprüche, **dadurch gekennzeichnet, dass** über einen Winkelabschnitt um eine vorgegebene Drehachse die Durchmesser der Kupplungsscheiben (3, 4) derart verringert sind, dass die Kupplungsscheiben (3, 4) gemeinsam in den Kupplungsring (2) einführbar sind.

8. Reibschaltkupplung (1) nach einem der vorgenannten Ansprüche, **dadurch gekennzeichnet, dass** die Durchmesser der zwei Kupplungsscheiben (3, 4) jeweils symmetrisch zu einer vorgegebenen Drehachse über einen Winkelabschnitt verringert sind.

9. Reibschaltkupplung (1) nach einem der vorgenannten Ansprüche, **dadurch gekennzeichnet, dass** am Kupplungsring (2) zumindest eine Ausnehmung ausgebildet ist, mit deren Hilfe die Kupplungsscheiben (3, 4) in den Kupplungsring (2) einführbar sind.

10. Reibschaltkupplung (1) nach einem der vorgenannten Ansprüche, **dadurch gekennzeichnet, dass** zwischen den Kupplungsscheiben (3, 4) ein oder mehrere Federn (5) angeordnet sind, die die Kupplungsscheiben (3, 4) voneinander wegdrücken.
